# EUROPÄISCHE PATENTSCHRIFT

(11) **EP 3 661 378 B1**
(45) Veröffentlichungstag und Bekanntmachung des Hinweises auf die Patenterteilung: **19.05.2021**
(21) Anmeldenummer: 18745599.3
(22) Anmeldetag: 25.07.2018
(51) Int. Cl.: A41D 1/00, H04B 5/00

(54) **VERBINDUNG ZWISCHEN ZWEI INTELLIGENTEN KLEIDUNGSSTÜCKEN**
CONNECTION BETWEEN TWO INTELLIGENT PIECES OF GARMENT
LIAISON ENTRE DEUX VÊTEMENTS INTELLIGENTS

(30) Priorität: 04.08.2017 AT 506532017
(43) Veröffentlichungstag der Anmeldung: 10.06.2020
(73) Patentinhaber: Adaptive Regelsysteme Gesellschaft mbH, 5020 Salzburg (AT)
(72) Erfinder: KLAPPER, Ulrich, 6830 Rankweil (AT)
(74) Vertreter: Patentanwälte Pinter & Weiss OG
(86) Internationale Anmeldenummer: PCT/EP2018/070108
(87) Internationale Veröffentlichungsnummer: WO 2019/025246

(56) Entgegenhaltungen:
- WO-A1-2005/055390
- DE-A1-102014 223 983
- US-A1- 2007 250 981

## Beschreibung

Die gegenständliche Erfindung betrifft eine Anordnung aus einem ersten intelligenten Kleidungsstück mit integrierter erster Elektronik und aus einem mit dem ersten intelligenten Kleidungsstück über eine Verbindung verbundenen zweiten intelligenten Kleidungstück mit integrierter zweiter Elektronik, sowie die Verwendung der Anordnung in einer Arbeitsbekleidung für Personen, die Arbeiten an stromführenden Teilen durchführen.

Als intelligente Kleidung werden Kleidungsstücke mit integrierter, in der Regel von außen nicht sichtbarer, Elektronik oder Elektrik bezeichnet. Mit der Elektronik können nahezu beliebige Funktionen realisiert werden, wie beispielsweise leuchtende Kleidung, Spielfunktionen (z.B. Lasertagging), Überwachung von Vitalparametern (z.B. Herzfrequenz, Blutdruck, Körpertemperatur, Atemfrequenz, Elektrokardiogramm (EKG), usw.), Sicherheitsfunktionen (z.B. um elektrische Spannungen zu detektieren, usw.), Kommunikation, Multimedia, etc. In manchen Anwendungen ist es erforderlich, zwei intelligente Kleidungsstücke miteinander zu verbinden, beispielsweise um eine mehrere Kleidungsstücke verteilte Funktionalität zu realisieren. Damit ist es notwendig, die intelligenten Kleidungsstücke elektrisch miteinander zu verbinden. Das kann entweder drahtlos und/oder drahtgebunden erfolgen.

Die DE 10 2014 223 983 A1 offenbart eine Anordnung von intelligenten Kleidungsstücken.

Die US 2007/0250981 A1 beschreibt eine Vorrichtung, weelche dazu vorgesehen ist, elektrische Energie und/oder Daten durch das Material eines Kleidungsstückes zu übertragen. Die WO 2005/055390 A1 zeigt ein erstes intelligentes Kleidungsstück und ein zweites intelligentes Kleidungsstück, die über eine Knopf-Knopfloch-Verbindung miteinander verbunden sind. Sowohl Knopf als auch Knopfloch sind mit einer Spule als Signalverbindungsteil versehen, womit eine Übertragung von Energie von einem Kleidungsstück auf das andere Kleidungsstück ermöglicht wird.

Es ist daher eine Aufgabe der gegenständlichen Erfindung, eine einfache und sichere Verbindung zwischen zwei intelligente Kleidungsstücke anzugeben.

Diese Aufgabe wird erfindungsgemäß durch die unabhängigen Ansprüche 1 und 9 gelöst. Das erste Verbindungsteil und das zweite Verbindungsteil zur Herstellung der Verbindung sind magnetisch verbunden, um einen ersten Signalverbindungsteil im ersten Verbindungsteil mit einen zweiten Signalverbindungsteil im zweiten Verbindungsteil zur Herstellung einer Signalverbindung zwischen erster Elektronik und zweiter Elektronik zueinander auszurichten und miteinander zu verbinden. Die magnetische Kopplung sorgt automatisch für die richtige Ausrichtung und Lage der beiden Signalverbindungsteile, um die benötigte Signalverbindung zu realisieren. Die Ausrichtung der beiden Signalverbindungsteile erfolgt durch die magnetische Kopplung selbsttätig, sodass die Handhabung der Verbindung ausgesprochen einfach und fehlersicher ist.

In einer einfachen Ausgestaltung bilden das erste Signalverbindungsteil und das zweite Signalverbindungsteil einen elektrischen Kontakt aus, womit sich auf einfache Weise jegliche Signalverbindung (Energie, Datenübertragen, elektrisches Signal) herstellen lässt.

Eine berührungslose Datenübertragung als Signalverbindung lässt sich auf einfache Weise realisieren, wenn im ersten Signalverbindungsteil und im zweiten Signalverbindungsteil jeweils eine Hochfrequenzspule angeordnet ist, die durch die magnetische Verbindung zur berührungslosen Datenübertragung zueinander ausgerichtet sind.

Eine berührungslose Energieübertragung oder Datenübertragung als Signalverbindung lässt sich auf einfache Weise realisieren, wenn im ersten Signalverbindungsteil eine Sendespule angeordnet ist und im zweiten Signalverbindungsteil eine Empfangsspule angeordnet ist, die durch die magnetische Verbindung zur induktiven Energieübertragung zueinander ausgerichtet sind. Eine derartige induktive Energieübertragung ist einfach und sicher zu implementieren.

Vorzugsweise ist im ersten Verbindungsteil zumindest ein Permanentmagnet angeordnet ist, der mit zumindest einem Magnetkoppelteil im zweiten Verbindungsteil zusammenwirkt, oder umgekehrt, wodurch sich die magnetische Kopplung besonders einfach realisieren lässt. Dabei ist es vorteilhaft, wenn auch der Magnetkoppelteil als Permanentmagnet ausgeführt ist, was eine starke magnetische Kopplung ermöglicht.

Ganz besonders vorteilhaft ist der zumindest eine Permanentmagnet in einen magnetischen Kreis eingebunden, indem der Permanentmagnet mit einem Joch verbunden ist, auf dem die Sendespule, oder Empfangsspule, angeordnet ist und das Magnetkoppelteil als Kern ausgeführt ist, auf dem die Empfangsspule, oder die Sendespule, angeordnet ist. Damit kann die induktive Energieübertragung verstärkt und verbessert werden. Das gilt in analoger Weise auch für die berührungslose Datenübertragung mittels Hochfrequenzspulen.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 zwei über eine erfindungsgemäß Verbindung miteinander verbundene intelligente Kleidungsstücke,
Fig.2 die erfindungsgemäße magnetische Verbindung,
Fig.3a, 3b 3c vorteilhafte Ausführungen der durch die Verbindung hergestellten Signalverbindung und
Fig.4 die Verbesserung der berührungslosen Signalverbindung durch die Einbindung des Permanentmagneten in einen magnetische Kreis.

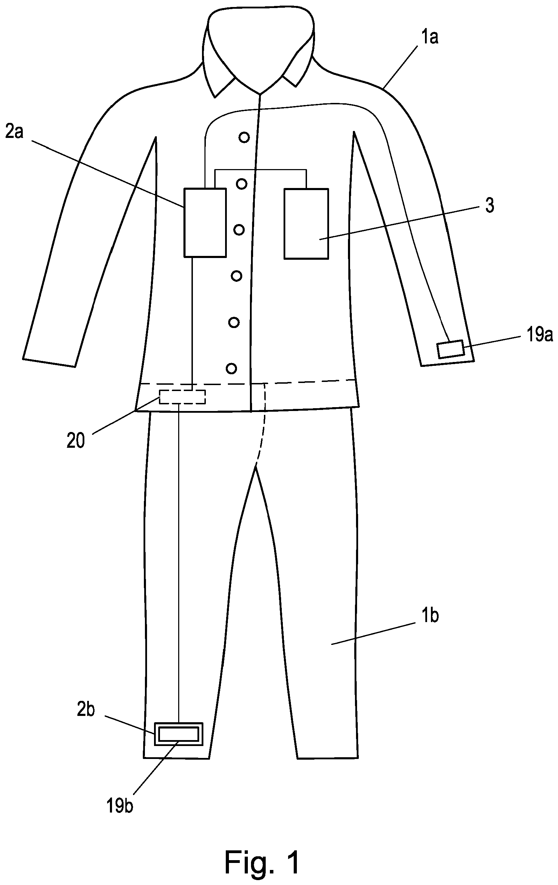

In Fig.1 sind eine erste intelligentes Kleidungsstück 1a, beispielsweise ein Hemd, und ein zweites intelligentes Kleidungsstück 1b, beispielsweise eine Hose, dargestellt. Im ersten intelligenten Kleidungsstück 1a ist eine Elektronik 2a integriert, die auch eine Elektrode 19a an einem Ärmelbund des Kleidungsstücks 1a umfasst, um z.B. eine elektrische Spannung zu messen. Im zweiten intelligenten Kleidungsstück 1b ist eine Elektronik 2b integriert, beispielsweise in Form eine Elektrode 19b zur Spannungsmessung. Um zwischen der Elektrode 19a der Elektronik 2a und der Elektrode 19b der Elektronik 2b eine elektrische Spannung messen zu können, muss zwischen den beiden Elektroden 19a, 19b eine elektrische Verbindung 20 bestehen.

Eine derartige Spannungsmessung ist natürlich nur ein konkreter Anwendungsfall, in dem zwei intelligente Kleidungsstücke 1a, 1b miteinander verbunden werden müssen. Die Verbindung 20 muss auch nicht elektrisch sein, sondern könnte auch in Form eine Datenverbindung ausgeführt sein. Natürlich kann die Verbindung 20 je nach Anwendung und Funktionalität der Elektronik 2a, 2b sowohl eine elektrische Verbindung 20, als auch eine Datenverbindung herstellen. Die Verbindung 20 kann außerdem entweder drahtlos oder drahtgebunden ausgeführt sein. Die Verbindung 20 kann auch dazu dienen, elektrische Energie von einem Kleidungsstück 1a auf das andere Kleidungsstück 1b zu übertragen, wenn nur an einem Kleidungsstück 1a ein Energiespeicher 3, beispielsweise ein Li-lonen Akku, eine Primärbatterie (Knopfzelle), etc., zur Energieversorgung vorgesehen ist. Die erfindungsgemäße Verbindung 20 wird nachfolgend im Detail beschrieben.

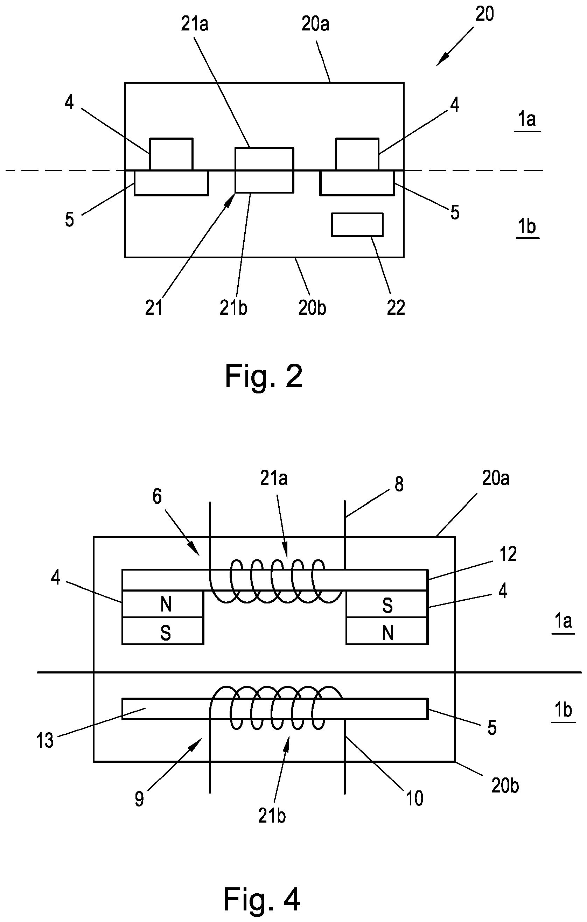

Eine erfindungsgemäße Verbindung 20 ist in Fig.2 schematisch dargestellt und besteht aus einem ersten Verbindungsteil 20a und einem zweiten Verbindungsteil 20b, die zusammen die Verbindung 20 ausbilden. Der erste Verbindungsteil 20a ist beispielsweise am ersten intelligenten Kleidungsstück 1a angeordnet und der zweite Verbindungsteil 20b am zweiten intelligenten Kleidungsstück 1b. Die beiden Verbindungsteile 20a, 20b werden magnetisch miteinander verbunden. Dazu ist an zumindest einem Verbindungsteil 20a zumindest ein Permanentmagnet 4 angeordnet, der mit zumindest einem Magnetkoppelteil 5 am jeweils anderen Verbindungsteil 20b zusammenwirkt. Der Magnetkoppelteil 5 ist entweder ein Teil aus einem ferromagnetischen Material oder ebenfalls ein in der richtigen Polarität angeordneter Permanentmagnet. Damit können die beiden Verbindungsteile 20a, 20b nur in einer definierten relativen Lage zueinander magnetisch verbunden werden, bzw. ergibt sich die richtige Lage automatisch durch die magnetische Kopplung. Der zumindest eine Permanentmagnet 4 und der Magnetkoppelteil 5 sind dazu selbstverständlich so angeordnet, dass diese zum magnetischen Zusammenhalten der Verbindung 20 grundsätzlich zusammenwirken können.

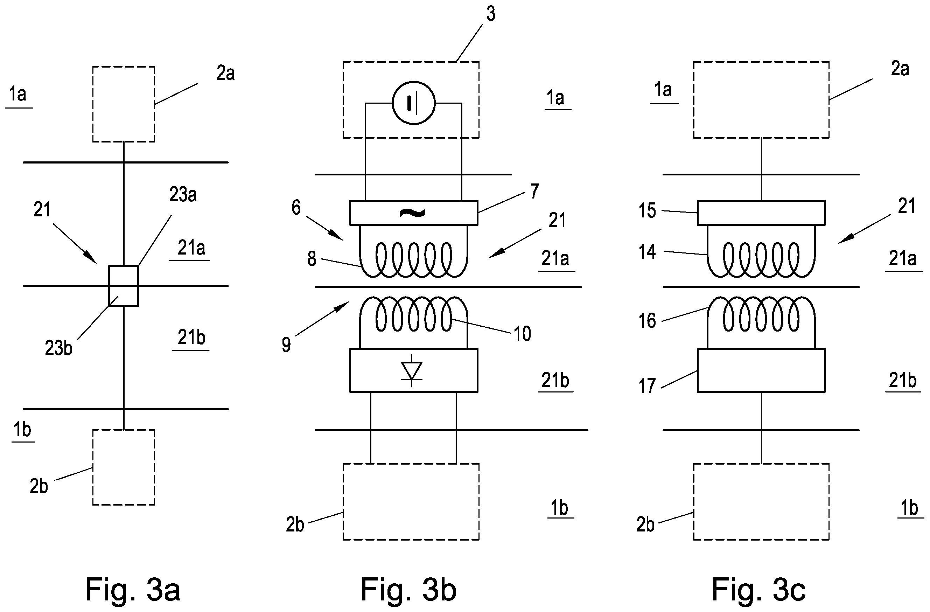

Darüber hinaus ist in beiden Verbindungsteilen 20a, 20b jeweils ein Signalverbindungsteil 21a, 21b angeordnet, um über die Verbindung 20 die benötigte(n) Signalverbindung(en) 21, also beispielweise eine Datenverbindung, eine elektrische Verbindung oder eine Energieübertragung, herzustellen. Durch die magnetische Kopplung der beiden Verbindungsteile 20a, 20b werden die beiden Signalverbindungsteile 21a, 21b gleichzeitig in der richtigen Lage und Position zueinander ausgerichtet und angeordnet, um die gewünschte Signalverbindung herzustellen. Die Signalverbindung 21 erfolgt damit automatisch durch die magnetische Kopplung in der definierten Lage. Damit lässt sich die Verbindung 20 sehr einfach handhaben, da der Benutzer nur die magnetische Kopplung herstellen muss und sich darüber hinaus keinerlei Gedanken machen muss. Mögliche Signalverbindungen 21 sind in Fig.3 dargestellt.

Eine einfache Signalverbindung 21 erfolgt durch elektrische Kontakte 23a, 23b, die durch die magnetische Verbindung der beiden Signalverbindungsteile 21a, 21b kontaktiert werden, wie in Fig.3a dargestellt. Dabei können auch mehrere elektrische Kontakte vorgesehen sein und geschlossen werden. Mit solchen elektrischen Kontakten 23a, 23b lassen sich elektrische Signale, beispielsweise in Form von Messwerten wie Spannungen, übertragen, aber es kann damit auch eine Datenverbindung oder Energieübertragung realisiert werden.

Mit Fig.3b ist eine berührungslose Energieübertragung als Signalverbindung 21 dargestellt. Im ersten Signalverbindungsteil 21a ist ein erster Energiekopplungsteil 6 einer induktiven Kopplung zur induktiven Energieübertragung angeordnet. Der erste Energiekopplungsteil 6 umfasst in einer einfachen Ausgestaltung einen Wechselrichter 7 (bzw. Oszillator) und eine damit verbundene Sendespule 8, die ein elektromagnetisches Feld aussendet. Im zweiten Signalverbindungsteil 21b ist ein zweiter Energiekopplungsteil 9 angeordnet. Der zweite Energiekopplungsteil 9 umfasst in einer einfachen Ausgestaltung eine Empfangsspule 10 zum Empfangen des von der Sendespule 8 ausgesendeten elektromagnetischen Feldes und einen damit verbundenen Gleichrichter 11. Der Gleichrichter 11 kann mit der Elektronik 2b eines intelligenten Kleidungsstückes 1b verbunden sein. Der Gleichrichter 11 könnte aber natürlich auch einen Energiepuffer speisen, der die Elektronik 2b versorgt. Der Wechselrichter 7 und/oder der Gleichrichter 11 kann dabei selbstverständlich auch Teil der jeweiligen Elektronik 2a, 2b sein. Es ist aber natürlich grundsätzlich unerheblich, von welchem Kleidungsstück aus die elektrische Energie übertragen wird.

Die magnetische Verbindung zwischen den beiden Verbindungsteilen 20a, 20b sorgt insbesondere auch dafür, dass der erste Energiekopplungsteil 6 (z.B. die Sendespule 8) und der zweite Energiekopplungsteil 9 (z.B. die Empfangsspule 10) im richtigen Abstand zueinander und in benötigter relativer Lage zueinander angeordnet sind, um die berührungslose Energieübertragung zu ermöglichen. Durch die magnetische Verbindung "schnappt" der erste Verbindungsteil 20a in der richtigen Lage und Position auf den zweiten Verbindungsteil 20b auf.

In einer weiteren vorteilhaften Ausgestaltung könnte als Signalverbindung 21 auch eine berührungslose Datenübertragung vorgesehen sein, wie in Fig.3c dargestellt. Zur berührungslosen Datenübertragung könnten im ersten Signalverbindungsteil 21a und im zweiten Signalverbindungsteil 21b jeweils Hochfrequenzspulen 14, 16 (typischerweise im Frequenzeberich zwischen 10kHz und 1MHz) vorgesehen sein, die zur Datenübertragung zusammenwirken. Dazu sendet eine der Hochfrequenzspulen 14, 16 zur Datenübertragung ein elektromagnetisches Feld, das von der jeweils anderen Hochfrequenzspule 14, 16 erfasst wird. Die Hochfrequenzspulen 14, 16 sind jeweils mit einer Kommunikationseinheit 15, 17 verbunden. Die Kommunikationseinheiten 15, 17 können dazu auch Teil der jeweiligen Elektronik 2a, 2b sein. Die Datenkommunikation kann nach einen beliebigen Kommunikationsprotokoll erfolgen.

Die Datenübertragung kann insbesondere genutzt werden, um zwischen den beiden Kleidungsstücken 1a, 1b oder deren Elektronik 2a, 2b Daten oder Information auszutauschen. Beispielsweise könnte so ein Status des Energiespeichers 3 (State of Charge SoC oder State of Health SoH) abgefragt oder übertragen werden. Solche Daten können aber auch mit der Elektronik 2a, 2b am Kleidungsstück 1a, 1b aufgenommene Messdaten sein, beispielsweise EKG-Daten, Bewegungsdaten, Temperaturen, elektrische Spannungen zwischen zwei Punkten an den Kleidungsstücken 1a, 1b. Solche Daten können in einer Speichereinheit eines Kleidungsstückes 1a, 1b oder auch des Energiespeichers 3 gespeichert werden, z.B. um später ausgelesen zu werden.

Die magnetische Verbindung zwischen den beiden Verbindungsteilen 20a, 20b kann in einer vorteilhaften Ausgestaltung der Erfindung nach Fig.4 auch genutzt werden, um die berührungslose Energieübertragung oder Datenübertragung zu verbessern. Dazu wird der zumindest eine Permanentmagnet 4 in einen magnetischen Kreis, der sich zwischen erstem Verbindungsteil 20a und zweitem Verbindungsteil 20b erstreckt, eingebunden. Im ersten Verbindungsteil 20a sind dazu in einer vorteilhaften Ausgestaltung beispielsweise zwei Permanentmagnete 4 vorgesehen, die durch ein Joch 12, aus ferromagnetischem Material als magnetischer Rückschluss, verbunden sind. Das Joch 12 dient gleichzeitig als Kern für die Sendespule 8. Auch im zweiten Verbindungsteil 20b ist ein Kern 13, vorzugsweise aus ferromagnetischem Material, angeordnet, auf dem die Empfangsspule 10 angeordnet ist. Der Kern 13 dient als Magnetkoppelteil 5 und schließt gleichzeitig den magnetischen Kreis. Durch die magnetische Verbindung zwischen beiden Verbindungsteilen 20a, 20b werden somit nicht nur die Sendespule 8 und die Empfangsspule 10 zueinander ausgerichtet, sondern es wird gleichzeitig der magnetische Kreis geschlossen. Der zumindest eine Permanentmagnet 4 im magnetischen Kreis erhöht damit den im magnetischen Kreis fließenden magnetischen Fluss, was die Energieübertragung von der Sendespule 8 auf die Empfangsspule 10 verbessert. In gleicher Weise kann damit auch die Datenübertragung verbessert werden, wenn die Hochfrequenzspulen 14, 16 am Joch 12 bzw. am Kern 13 angeordnet werden.

Eine besonders vorteilhafte Anwendung der erfindungsgemäßen Verbindung 20 ist in einer Arbeitsbekleidung bestehend aus einem ersten Kleidungsstück 1a und einem zweiten Kleidungsstück 1b (wie in Fig.1) für Personen, die an stromführenden Teilen arbeiten. Die Elektronik 2a, 2b in den beiden Kleidungsstücken 1a, 1b kann hierbei ausgeführt sein und funktional so zusammenwirken, um eine elektrische Spannung zwischen zumindest zwei Punkten der Arbeitsbekleidung zu erfassen, insbesondere zwischen einem ersten Punkt am ersten Kleidungsstück 1a, z.B. am Handgelenk, und einen zweiten Punkt am zweiten Kleidungsstück 1b, z.B. am Fußgelenk, wie in Fig.1 angedeutet. Die erfasste Spannung kann dann ausgewertet werden (durch eine Elektronik 2a, 2b oder extern) und eine gewünschte Aktion ausgelöst werden (durch eine Elektronik 2a, 2b oder extern). Für eine einfache Messung einer elektrischen Spannung über zwei Kleidungsstücke 1a, 1b und über die Verbindung 20 ist eine Signalverbindung mit einem elektrischen Kontakt 23 wie in Fig.3a vorteilhaft.

Eine Elektronik 2a, 2b kann dazu auch eine Sendeeinrichtung, z.B. ein Funksender, umfassen, die im Falle einer zu hohen Spannung zwischen den gemessenen Punkten ein Notaus-Signal an eine externe Schalteinheit sendet, um die stromführenden Teile stromlos zu schalten, wenn die Spannung einen definierten Grenzwert überschreitet. Ebenso könnte dazu eine Sendeeinrichtung des Energiespeichers 3 genutzt werden. Auf diese Weise können mögliche Verletzungen der die Arbeitsbekleidung tragenden Person durch Stromschlag eingeschränkt werden, tödliche Unfälle bei richtiger Anwendung dieser Sicherheitsfunktion sogar gänzlich vermieden werden. Es kann dabei auch vorgesehen sein, durch eine Signaleinrichtung an einem Kleidungsstück 1a, 1b (ebenfalls als Teil der Elektronik 2a, 2b) anzuzeigen, ob die Sicherheitsfunktion betriebsbereit ist, beispielsweise ob die Verbindung 20, bzw. die Signalverbindung 21, hergestellt wurde.

Die korrekte Verbindung könnte beispielsweise mit einem Reedkontakt 22 festgestellt werden, der in dem Verbindungsteil 20b angeordnet ist, in dem der Magnetkoppelteil 5 angeordnet ist. Mit dem Reedkontakt 22 kann damit das Magnetfeld des Permanentmagneten 4 erfasst werden. Wenn die magnetische Verbindung zwischen den beiden Verbindungsteilen 20a, 20b hergestellt ist, könnte der Reedkontakt so ausgeführt und angeordnet sein, dass dieser durch das Magnetfeld des Permanentmagneten 4 schließt, womit die ordnungsgemäße Verbindung festgestellt werden könnte.

## Patentansprüche

1. Anordnung aus einem ersten intelligenten Kleidungsstück (1a) mit integrierter erster Elektronik (2a) und aus einem mit dem ersten intelligenten Kleidungsstück über eine Verbindung (20) verbundenen zweiten intelligenten Kleidungstück (1b) mit integrierter zweiter Elektronik (2b), wobei am ersten intelligenten Kleidungsstück (1a) ein erstes Verbindungsteil (20a) vorgesehen ist und an einem zweiten intelligenten Kleidungsstück (1b) ein zweites Verbindungsteil (20b) vorgesehen ist, **dadurch gekennzeichnet, dass** das erste Verbindungsteil (20a) und das zweite Verbindungsteil (20b) zur Herstellung der Verbindung (20) magnetisch verbunden sind, um einen ersten Signalverbindungsteil (21a) im ersten Verbindungsteil (20a) mit einen zweiten Signalverbindungsteil (21b) im zweiten Verbindungsteil (20b) zur Herstellung einer Signalverbindung (21) zwischen erster Elektronik (2a) und zweiter Elektronik (2b) zueinander auszurichten und miteinander zu verbinden.

2. Anordnung nach Anspruch 1, wobei das erste Signalverbindungsteil (21a) und das zweite Signalverbindungsteil (21b) einen elektrischen Kontakt (23) ausbilden.

3. Anordnung nach Anspruch 1, wobei im ersten Signalverbindungsteil (21a) und im zweiten Signalverbindungsteil (21b) jeweils eine Hochfrequenzspule (14, 16) angeordnet ist, die durch die magnetische Verbindung zur berührungslosen Datenübertragung zueinander ausgerichtet sind.

4. Anordnung nach Anspruch 1, wobei im ersten Signalverbindungsteil (21a) eine Sendespule (8) angeordnet ist und im zweiten Signalverbindungsteil (21b) eine Empfangsspule (10) angeordnet ist, die durch die magnetische Verbindung zur induktiven Energieübertragung oder Datenübertragung zueinander ausgerichtet sind.

5. Anordnung nach einem der Anspruch 1 bis 4, wobei im ersten Verbindungsteil (20a) zumindest ein Permanentmagnet (4) angeordnet ist, der mit zumindest einem Magnetkoppelteil (5) im zweiten Verbindungsteil (20b), oder umgekehrt, zusammenwirkt.

6. Anordnung nach Anspruch 5, wobei der Magnetkoppelteil (5) als Permanentmagnet (4) ausgeführt ist.

7. Anordnung nach Anspruch 3 und 5 oder 6, wobei der zumindest eine Permanentmagnet (4) in einen magnetischen Kreis eingebunden ist, indem der Permanentmagnet (4) mit einem Joch (12) verbunden ist, auf dem eine Hochfrequenzspule (14), angeordnet ist und das Magnetkoppelteil (5) als Kern (13) ausgeführt ist, auf dem die andere Hochfrequenzspule (16) angeordnet ist

8. Anordnung nach Anspruch 4 und 5 oder 6, wobei der zumindest eine Permanentmagnet (4) in einen magnetischen Kreis eingebunden ist, indem der Permanentmagnet (4) mit einem Joch (12) verbunden ist, auf dem die Sendespule (8), oder Empfangsspule (10), angeordnet ist und das Magnetkoppelteil (5) als Kern (13) ausgeführt ist, auf dem die Empfangsspule (10), oder die Sendespule (8), angeordnet ist.

9. Verwendung der Anordnung nach einem der Ansprüche 1 bis 8 in einer Arbeitsbekleidung für Personen, die Arbeiten an stromführenden Teilen durchführen, wobei die Arbeitsbekleidung aus dem ersten intelligenten Kleidungsstück (1a) und dem zweiten intelligenten Kleidungsstück (1b) besteht, die durch die Verbindung (20) miteinander verbunden sind und durch die Elektronik (2a, 2b) der beiden intelligenten Kleidungsstücke (1a, 1b) eine elektrische Spannung zwischen einem Punkt am ersten Kleidungsstück (1a) und einem Punkt am zweiten Kleidungsstück (1b) erfasst wird.

10. Verwendung nach Anspruch 9, wobei beim Überschreiten eines vorgegebenen Grenzwertes für die Spannung durch eine Elektronik (2a, 2b) das Stromlosschalten der stromführenden Teile ausgelöst wird.

## Claims

1. Arrangement of a first intelligent piece of clothing (1a) with integrated first electronics (2a) and of a second intelligent piece of clothing (1b) with integrated second electronics (2b) connected to the first intelligent piece of clothing by means of a connection (20), wherein a first connecting part (20a) is provided on a first intelligent piece of clothing (1a) and a second connecting part (20b) is provided on a second intelligent piece of clothing (1b), **characterized in that** the first connecting part (20a) and the second connecting part (20b) are magnetically connected for establishing the connection (20), in order to align and interconnect a first signal connecting part (21a) in the first connecting part (20a) with a second signal connecting part (21b) in the second connecting part (20b) for establishing a signal connection (21) between the first electronics (2a) and second electronics (2b).

2. Arrangement according to claim 1, wherein the first signal connecting part (21a) and the second signal connecting part (21b) form an electrical contact (23).

3. Arrangement according to claim 1, wherein high-frequency coils (14, 16) are arranged respectively in the first signal connecting part (21a) and in the second signal connecting part (21b), which are aligned with one another by the magnetic connection for contactless data transmission.

4. Arrangement according to claim 1, wherein a transmission coil (8) is arranged in the first signal connecting part (21a) and a reception coil (10) is arranged in the second signal connecting part (21b), said coil being aligned to each other for the inductive energy transmission or data transmission.

5. Arrangement according to one of claims 1 to 4, wherein at least one permanent magnet (4) is arranged in the first connecting part (20a), which interacts with at least one magnetic coupling part (5) in the second connecting part (20b), or vice versa.

6. Connection according to claim 5, wherein the magnetic coupling part (5) is designed as a permanent magnet (4).

7. Arrangement according to claim 3 and 5 or 6, wherein the at least one permanent magnet (4) is integrated into a magnetic circuit, in that the permanent magnet (4) is connected to a yoke (12), on which a high-frequency coil (14) is arranged and the magnetic coupling part (5) is designed as a core (13) on which the other high-frequency coil (16) is arranged.

8. Arrangement according to claim 3 and 5 or 6, wherein the at least one permanent magnet (4) is integrated in a magnetic circuit, in that the permanent magnet (4) is connected with a yoke (12), on which the transmitting coil (8), or the receiving coil (10), is arranged and the magnetic coupling part (5) is designed as a core (13), on which the receiving coil (10), or the transmitting coil (8), is arranged.

9. Use of the arrangement according to any of claims 1 to 8 in workwear for people who carry out work on live parts, the workwear consisting of the first intelligent piece of clothing (1a) and the second intelligent piece of clothing (1b), which are interconnected by means of the connection (20) and wherein an electrical voltage is detected by the electronics (2a, 2b) of the two intelligent pieces of clothing (1a, 1b), between a point on the first piece of clothing (1a) and a point on the second piece of clothing (1b).

10. Use according to claim 9, wherein the de-energizing of the live parts is triggered by electronics (2a, 2b) when a predetermined limit value for the voltage is exceeded.

## Revendications

1. Ensemble d'une première pièce de vêtement intelligent (1a) avec un premier système électronique (2a) intégré et d'une seconde pièce de vêtement intelligent (1b) avec un second système électronique (2b) intégré connecté à la première pièce de vêtement intelligent par l'intermédiaire d'une connexion (20), une première partie de connexion (20a) étant prévue sur la première pièce de vêtement intelligent (1a) et une seconde partie de connexion (20b) étant prévue sur une seconde pièce de vêtement intelligent (1b), **caractérisé en ce que** la première partie de connexion (20a) et la seconde partie de connexion (20b) sont connectées magnétiquement pour établir la connexion (20) afin d'aligner et de connecter une première partie de connexion de signal (21a) dans la première partie de connexion (20a) et une seconde partie de connexion de signal (21b) dans la seconde partie de connexion (20b) l'une avec l'autre pour établir une connexion de signal (21) entre le premier système électronique (2a) et le second système électronique (2b).

2. Ensemble selon la revendication 1, la première partie de connexion de signal (21a) et la seconde partie de connexion de signal (21b) formant un contact électrique (23).

3. Ensemble selon la revendication 1, une bobine haute fréquence (14, 16) étant disposée respectivement dans la première partie de connexion de signal (21a) et dans la seconde partie de connexion de signal (21b), lesquelles sont alignées l'une avec l'autre par la connexion magnétique afin de transmettre des données sans contact.

4. Ensemble selon la revendication 1, une bobine émettrice (8) étant agencée dans la première partie de connexion de signal (21a) et une bobine réceptrice (10) étant agencée dans la seconde partie de connexion de signal (21b), lesquelles sont alignées l'une avec l'autre par la connexion magnétique afin de transmettre de l'énergie inductive ou des données.

5. Ensemble selon l'une des revendications 1 à 4, au moins un aimant permanent (4) étant disposé dans la première partie de connexion (20a) et interagissant avec au moins une partie de couplage magnétique (5) dans la seconde partie de connexion (20b), ou inversement.

6. Ensemble selon la revendication 5, la partie de couplage magnétique (5) étant conçue comme un aimant permanent (4).

7. Ensemble selon la revendication 3 et 5 ou 6, l'au moins un aimant permanent (4) étant intégré dans un circuit magnétique en ce que l'aimant permanent (4) est connecté à une culasse (12) sur laquelle une bobine haute fréquence (14) est disposée et la partie de couplage magnétique (5) étant conçue comme un noyau (13) sur lequel l'autre bobine haute fréquence (16) est disposée.

8. Ensemble selon la revendication 4 et 5 ou 6, l'au moins un aimant permanent (4) étant intégré dans un circuit magnétique en ce que l'aimant permanent (4) est connecté à une culasse (12) sur laquelle la bobine émettrice (8) ou la bobine réceptrice (10) est disposée et la partie de couplage magnétique (5) étant conçue comme un noyau (13) sur lequel la bobine réceptrice (10) ou la bobine émettrice (8) est disposée.

9. Utilisation de l'ensemble selon l'une des revendications 1 à 8 dans un vêtement de travail pour des personnes travaillant sur des pièces sous tension, le vêtement de travail se composant de la première pièce de vêtement intelligent (1a) et de la seconde pièce de vêtement intelligent (1b) qui sont connectées l'une à l'autre par la connexion (20) et une tension électrique entre un point sur la première pièce de vêtement (1a) et un point sur la seconde pièce de vêtement (1b) étant détectée par les systèmes électroniques (2a, 2b) des deux pièces de vêtement intelligent (1a, 1b).

10. Utilisation selon la revendication 9, la mise hors tension des pièces sous tension étant déclenchée par un système électronique (2a, 2b) lorsqu'une valeur limite prédéterminée pour la tension est dépassée.
